(19) Europäisches Patentamt
European Patent Office
Office européen des brevets

(11) **EP 4 645 852 A1**

(12) **EUROPEAN PATENT APPLICATION**
published in accordance with Art. 153(4) EPC

(43) Date of publication:
**05.11.2025 Bulletin 2025/45**

(21) Application number: **23913012.3**

(22) Date of filing: **29.12.2023**

(51) International Patent Classification (IPC):
**H04N 19/107** $^{(2014.01)}$     **H04N 19/70** $^{(2014.01)}$
**H04N 19/157** $^{(2014.01)}$     **H04N 19/109** $^{(2014.01)}$
**H04N 19/52** $^{(2014.01)}$      **H04N 19/593** $^{(2014.01)}$
**H04N 19/176** $^{(2014.01)}$

(52) Cooperative Patent Classification (CPC):
**H04N 19/107; H04N 19/109; H04N 19/157;
H04N 19/176; H04N 19/52; H04N 19/593;
H04N 19/70**

(86) International application number:
**PCT/KR2023/021961**

(87) International publication number:
**WO 2024/144338 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2022 KR 20220188580**

(71) Applicant: **LG Electronics Inc.
Yeongdeungpo-gu
Seoul 07336 (KR)**

(72) Inventors:
• **PARK, Naeri
Seoul 06772 (KR)**
• **LIM, Jaehyun
Seoul 06772 (KR)**
• **NAM, Junghak
Seoul 06772 (KR)**
• **JANG, Hyeongmoon
Seoul 06772 (KR)**
• **HONG, Myungoh
Seoul 06772 (KR)**
• **AHN, Yongjo
Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **IMAGE ENCODING/DECODING METHOD AND DEVICE, AND RECORDING MEDIUM FOR STORING BITSTREAM**

(57)    An image decoding method and device according to the present disclosure may: generate prediction samples of a current block on the basis of a predetermined inter prediction mode; derive residual samples of the current block on the basis of information on sub block transform (SBT); and reconstruct the current block on the basis of the prediction samples and residual samples of the current block. Here, at least one piece of the information on SBT may be derived on the basis of the inter prediction mode of the current block, and the information on SBT may include at least one of an SBT flag, an SBT size flag, an SBT direction flag, and an SBT location flag.

FIG.4

GENERATE PREDICTION SAMPLE OF CURRENT BLOCK
BASED ON PREDETERMINED INTER PREDICTION MODE — S400

DERIVE RESIDUAL SAMPLE OF CURRENT BLOCK
BASED ON INFORMATION ON SUBBLOCK TRANSFORM — S410

RECONSTRUCT CURRENT BLOCK
BASED ON PREDICTION SAMPLE AND RESIDUAL SAMPLE — S420

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure seeks to provide a method and apparatus for deriving an inter prediction mode in a merge mode or a skip mode.

The present disclosure seeks to provide a method and apparatus for deriving an intra prediction mode and/or weights in a CIIP mode.

The present disclosure seeks to provide a method and apparatus for signaling information on a GPM mode.

The present disclosure seeks to provide a method and apparatus for signaling/deriving information on subblock transform based on an inter prediction mode in a merge mode or a skip mode.

[Technical Solution]

An image decoding method and apparatus according to the present disclosure may generate prediction samples of a current block based on a predetermined inter prediction mode, derive residual samples of the current block based on information on subblock transform (SBT), and reconstruct the current block based on the prediction samples and residual samples of the current block. Herein, at least one of the information on the SBT may be derived based on the inter prediction mode, and the information on the SBT may include at least one of an SBT flag, an SBT size flag, an SBT direction flag, or an SBT position flag.

In an image decoding method and apparatus according to the present disclosure, when the inter prediction mode of the current block is a CIIP mode, the SBT may be allowed for the current block.

In an image decoding method and apparatus according to the present disclosure, when the inter prediction mode of the current block is the CIIP mode, at least one of the information on the SBT may not be signaled and may be derived based on an intra prediction mode for the CIIP mode.

In an image decoding method and apparatus according to the present disclosure, the intra prediction mode of the current block may be derived as any one of one or more candidate modes belonging to a candidate list.

In an image decoding method and apparatus according to the present disclosure, when the inter prediction mode of the current block is the CIIP mode, at least one of the information on the SBT may not be signaled and may be derived based on a weight for the CIIP mode.

In an image decoding method and apparatus according to the present disclosure, the weight may be determined based on at least one of an intra prediction mode of the current block, a position of a sub-region to which a prediction sample of the current block belongs, or a weight index.

In an image decoding method and apparatus according to the present disclosure, the CIIP mode may be allowed regardless of a flag indicating whether the current block is a block coded in a skip mode.

In an image decoding method and apparatus according to the present disclosure, when the inter prediction mode of the current block is a geometric partitioning merge mode, the subblock transform may be allowed for the current block.

In an image decoding method and apparatus according to the present disclosure, when the inter prediction mode of the current block is the geometric partitioning merge mode, at least one of the information on the SBT may not be signaled and may be derived based on at least one of an angle of a boundary line according to geometric partitioning of the current block or a distance from a center position of the current block to the boundary line.

An image encoding method and apparatus according to the present disclosure may generate prediction samples of a current block based on a predetermined inter prediction mode, derive residual samples of the current block based on the prediction samples of the current block, determine information on subblock transform (SBT) for encoding the residual samples of the current block, encode the residual samples of the current block to generate residual information, and encode the residual information of the current block to generate a bitstream. Herein, at least one of the information on the SBT may be derived based on the inter prediction mode, and the information on the SBT may include at least one of an SBT flag, an SBT size flag, an SBT direction flag, or an SBT position flag.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and a device for transmitting video/image information generated according to an image encoding method according to the present disclosure are provided.

[Advantageous Effects]

According to the present disclosure, the encoding efficiency of inter prediction can be improved by defining an inter prediction mode available in merge mode or skip mode and efficiently signaling it.

According to the present disclosure, the encoding efficiency of the CIIP mode can be improved by determining the optimal intra prediction mode and the weight for the CIIP mode.

According to the present disclosure, by more effectively signaling information on a geometric partitioning merge mode, the number of bits required for encoding the information can be reduced.

According to the present disclosure, by omitting signaling of all or some of information on subblock transform and deriving it to a specific value depending on the inter prediction mode in a merge mode or a skip mode, encoding efficiency can be improved.

[Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 illustrates an image decoding method performed in an image decoding apparatus (300) according to the present disclosure.

FIG. 5 exemplarily shows pre-defined intra prediction modes and prediction directions thereof according to the present disclosure.

Fig. 6 illustrates the angle of the boundary line corresponding to each angleIdx according to the present disclosure.

FIG. 7 illustrates a schematic configuration of a decoding apparatus (300) that performs an image decoding method according to the present disclosure.

FIG. 8 illustrates an image encoding method performed in an encoding apparatus (200) according to the present disclosure.

FIG. 9 illustrates a schematic configuration of an encoding apparatus (200) that performs an image encoding method according to the present disclosure.

FIG. 10 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

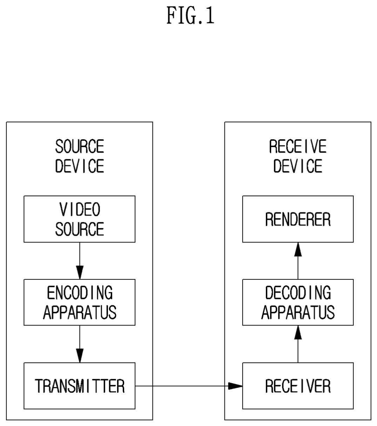

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

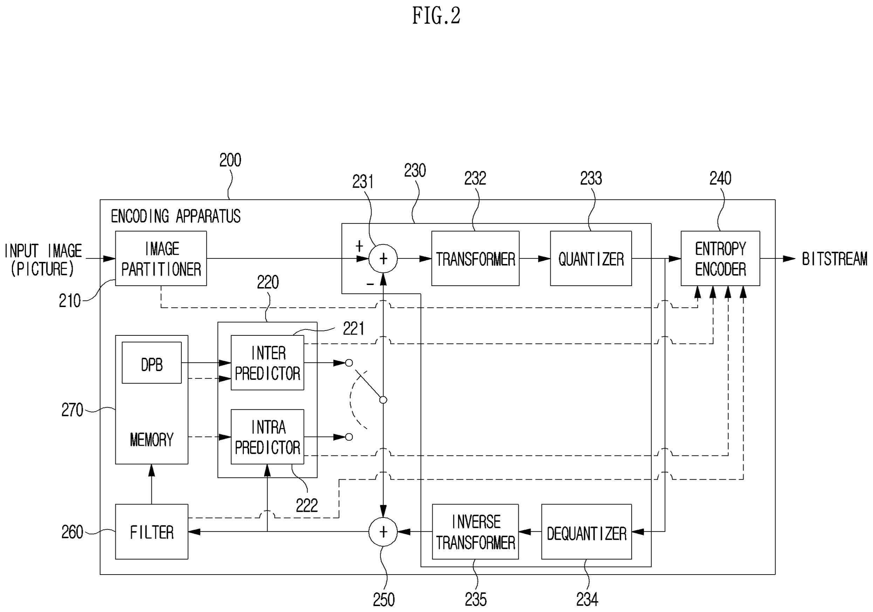

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream.

Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

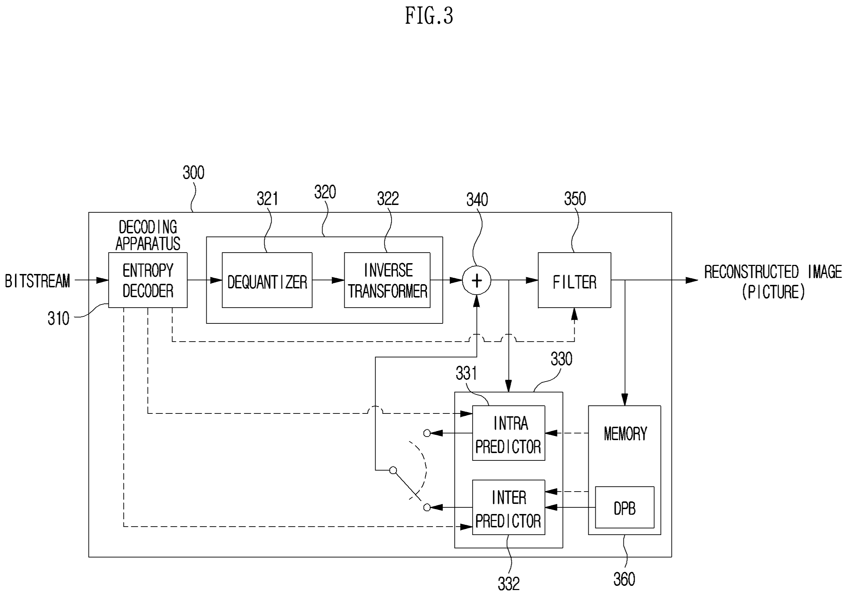

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

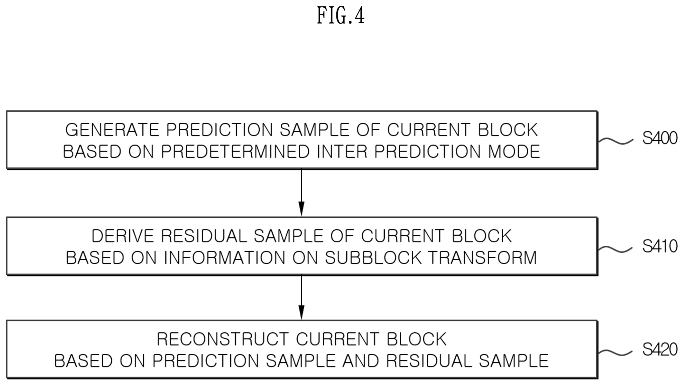

FIG. 4 illustrates an image decoding method performed in an image decoding apparatus according to the present disclosure.

Referring to FIG. 4, prediction samples of a current block may be generated based on a predetermined inter prediction mode (S400).

When the current block is coded in the merge mode, any one of a plurality of pre-defined inter prediction modes in the image decoding apparatus may be set as the inter prediction mode of the current block. In this case, the plurality of inter prediction modes may include at least one of a subblock merge mode, a merge mode with motion vector difference (MMVD) mode, a regular merge mode, a combined inter and intra prediction (CIIP) mode, or a geometric partitioning merge mode (GPM mode).

The subblock merge mode may divide a current block into a plurality of subblocks and derive motion information from spatial/temporal neighboring block in units of subblocks. Prediction samples of the current block may be generated based on the derived motion information. The subblock merge mode may be adaptively used based on a merge subblock flag (merge_subblock_flag) indicating whether subblock-based motion information is derived from a neighboring block for the current block.

The MMVD mode may derive motion information based on the regular merge mode, but may modify the motion vector of the motion information based on the signaled motion vector difference (MVD). Prediction samples of the current block may be generated based on the motion information. The MMVD mode may be adaptively used based on the MMVD flag (mmvd_merge_flag) indicating whether MMVD is used for the current block.

The CIIP mode may derive a prediction sample based on a weighted sum of an inter prediction sample and an intra prediction sample. The CIIP mode may be adaptively used based on a CIIP flag (ciip_flag) indicating whether the CIIP mode is applied to a current block. The CIIP flag may be signaled through a bitstream. The CIIP flag may be derived as 1 when a predetermined condition is satisfied, and may be derived as 0 otherwise. Here, the predetermined condition may include at least one of the following conditions.

- sps_ciip_enabled_flag is equal to 1. That is, the CIIP mode is available.
- general_merge_flag is equal to 1. That is, the current block is a block coded in the merge mode.
- merge_subblock_flag is equal to 0. That is, the inter prediction mode of the current block is not the subblock merge mode.
- regular_merge_flag is equal to 1. That is, the motion information of the current block is derived based on the regular merge mode or MMVD mode.
- cu_skip_flag is equal to 0. That is, the current block is not a block coded in the skip mode.
- The width and height of the current block are less than 128.
- The product of the width and height of the current block is greater than or equal to 64.

The GPM mode may be a prediction mode based on geometric partitioning, and may be divided into a GPM-INTRA-based merge mode and a GPM-based merge mode. The GPM-INTRA-based merge mode may divide a current block into two partitions (P0, P1) according to the geometric partitioning mode (GPM), derive an inter prediction block and an intra prediction block corresponding to the two partitions, respectively, and generate a prediction block of the current block based on a weighted sum of the inter prediction block and the intra prediction block. Here, the inter prediction block may be derived based on a regular merge mode. The intra prediction block may be derived based on a predetermined intra prediction mode, and the predetermined intra prediction mode may be set as one of one or more candidate modes belonging to a candidate list. To this end, a mode index specifying one of a plurality of candidate modes belonging to the candidate list may be signaled. The one or more candidate modes may include at least one of a parallel mode that is parallel to a boundary between partitions in a current block, a perpendicular mode that is perpendicular to a boundary between the partitions, or a planar mode. A GPM-INTRA-based merge mode may be adaptively used based on a flag (gpm_intra_flag) indicating whether the GPM-INTRA-based merge mode is applied to a current block.

The GPM-based merge mode may divide a current block into two partitions (P0, P1) according to a geometric partitioning mode (GPM), derive a first inter prediction block and a second inter prediction block corresponding to the two partitions, respectively, and generate a prediction block of the current block based on a weighted sum of the first and second inter prediction blocks. Here, the first and second inter prediction blocks may be derived based on a regular merge mode. The GPM-based merge mode may be adaptively used based on a flag (gpm_intra_flag) indicating whether the GPM-INTRA-based merge mode is applied to the current block. The GPM-based merge mode may be adaptively used based on a flag (MergeGpmFlag) indicating whether the GPM-based merge mode is applied to the current block. MergeGpmFlag may be derived as 1 when a predetermined condition is satisfied, and may be derived as 0 otherwise. Here, the predetermined condition may include at least one of the following conditions.

- sps_gpm_enabled_flag is equal to 1. That is, GPM-based merge mode is available.
- The slice type to which the current block belongs is a B slice.
- general_merge_flag is equal to 1. That is, the current block is a block coded in the merge mode.
- The width and height of the current block are greater than or equal to 8.
- cbWidth is less than (8*cbHeight). Here, cbWidth and cbHeight represent the width and height of the current block, respectively.
- cbHeight is less than (8*cbWidth).
- regular_merge_flag is equal to 0. That is, the motion information of the current block is not derived based on the regular merge mode or MMVD mode.
- merge_subblock_flag is equal to 0. That is, the inter prediction mode of the current block is not the subblock merge mode.
- ciip_flag is equal to 0. That is, the CIIP mode is not applied to the current block.

when the current block is coded in the merge mode, which of the inter prediction modes corresponds to the inter prediction mode of the current block may be sequentially checked according to the priority order between the inter prediction modes. For example, first, it may be checked whether the inter prediction mode of the current block is the sub-block merge mode. When merge_subblock_flag is equal to 1, the inter prediction mode of the current block may be determined as the sub-block merge mode. When merge_subblock_flag is equal to 0, it may be checked whether the inter prediction mode of the current block is the regular merge mode based on regular_merge_flag. When regular_merge_flag is equal to 1, it may be checked whether the inter prediction mode of the current block is the MMVD mode based on mmvd_merge_flag. When mmvd_merge_flag is equal to 1, the inter prediction mode of the current block may be determined as the MMVD mode. When mmvd_merge_flag is equal to 0, the inter prediction mode of the current block may be determined as the regular merge mode. When regular_merge_flag is equal to 0, it may be checked whether the inter prediction mode of the current block is the CIIP mode based on ciip_flag. When ciip_flag is equal to 1, the inter prediction mode of the current block may be determined as the CIIP mode. When ciip_flag is equal to 0, it may be checked whether the inter prediction mode of the current block is the GPM-INTRA-based merge mode based on gpm_intra_flag. When gpm_intra_flag is equal to 1, the inter prediction mode of the current block is determined as the GPM-INTRA-based merge mode, and when gpm_intra_flag is equal to 0, the inter prediction mode of the current block may be determined as the GPM-based merge mode.

When the current block is coded in the skip mode, prediction samples of the current block may be generated based on any one of the aforementioned inter prediction modes, and the generated prediction samples may be set as reconstruction samples. However, when the current block is coded in the skip mode, the CIIP mode may be restricted from being applied. That is, when the current block is a block coded in the skip mode and the regular_merge_flag for the current block is equal to 0, ciip_flag is not signaled and is drived as 0, and the inter prediction mode of the current block may be determined as the GPM-based merge mode or the GPM-INTRA-based merge mode.

Alternatively, the restriction on the application of the CIIP mode to the current block coded in the skip mode is based on the assumption that the intra prediction block according to the CIIP mode has sufficiently many residual signals. If the compression efficiency of the CIIP mode is improved, forcing unnecessary residual signals to always be transmitted may actually cause a decrease in the compression performance. Therefore, similar to the merge mode described above, the application of the CIIP mode to the current block may be allowed even if the current block is coded in the skip mode.

For example, regular_merge_flag may be signaled when a predetermined condition is satisfied, and may not be signaled otherwise. Here, the predetermined condition may include at least one of the following conditions:

- The width and height of the current block are less than 128.
- Regardless of cu_skip_flag, sps_ciip_enabled_flag is equal to 1, and the product of the width and height of the current block is greater than or equal to 64.
- sps_gpm_enabled_flag is equal to 1, the slice type to which the current block belongs is a B slice, the width (cbWidth) and height (cbHeight) of the current block are greater than or equal to 8, cbWidth is less than (8*cbHeight), and cbHeight is less than (8*cbWidth).

ciip_flag may be signaled when a predetermined condition is satisfied, regardless of whether the current block is a block coded in the skip mode (i.e., cu_skip_flag). In this way, by skipping the signaling of residual information in the CIIP mode, the compression efficiency may be increased, and the complexity may be reduced by reducing the number of condition checks in the process of signaling/parsing ciip_flag. The predetermined condition may include at least one of the following conditions.

- sps_ciip_enabled_flag is equal to 1.
- sps_gpm_enabled_flag is equal to 1.
- The slice type that the current block belongs to is a B slice.
- The width (cbWidth) and height (cbHeight) of the current block are greater than or equal to 8.
- cbWidth is less than (8*cbHeight).
- cbHeight is less than (8*cbWidth).
- The width and height of the current block are less than 128.

When the predetermined condition is not satisfied, ciip_flag may not be signaled. In this case, ciip_flag may be derived as 0 or 1 according to the above-described derivation condition of ciip_flag. However, the condition related to cu_skip_flag may be excluded from the above-described derivation condition of ciip_flag.

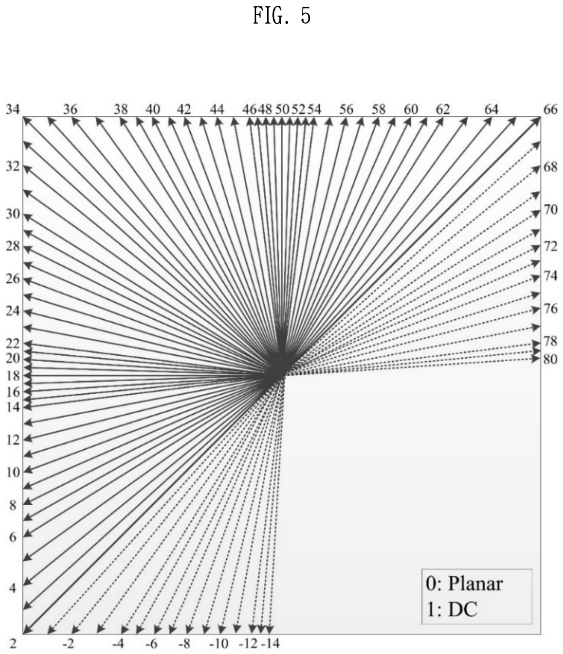

Intra prediction samples according to the CIIP mode may be derived based on a predetermined intra prediction mode. The predetermined intra prediction mode may be at least one of intra prediction modes that are identically pre-defined for an encoding apparatus and a decoding apparatus. FIG. 5 exemplarily shows pre-defined intra prediction modes and prediction directions thereof according to the present disclosure. Referring to FIG. 5 , the pre-defined intra prediction modes may include a planar mode (mode 0), a DC mode (mode 1), directional modes (modes 2 to 66), and wide-angle modes (modes -1 to -14, modes 67 to 80). A candidate list for a current block may be constructed using one or more intra prediction modes among the pre-defined intra prediction modes as candidate mode(s), and an intra prediction mode of the current block may be derived based on any one of the one or more candidate modes belonging to the candidate list. To this end, a mode index (ciip_mpm_idx) specifying any one of a plurality of candidate modes belonging to the candidate list may be signaled. The candidate list may include at least one of the planar mode, the DC mode, or the directional modes. When the current block is a non-square block, the candidate list may further include at least one of the wide-angle modes.

Alternatively, the pre-defined intra prediction modes may be divided into a plurality of groups. Based on a group index (ciip_group_idx) specifying one of the plurality of groups, a group to which the intra prediction mode of the current block belongs may be determined among the plurality of groups. A candidate list may be constructed using one or more intra prediction modes belonging to the determined group as candidate mode(s). Based on a mode index specifying any one of one or more of the candidate modes belonging to the candidate list, the intra prediction mode of the current block may be determined.

For example, the pre-defined intra prediction modes may be divided into a first group including at least one of a planar mode, a DC mode, or wide-angle modes, a second group including at least one of directional modes having a horizontal directionality (modes 2 to 34), and a third group including at least one of directional modes having a vertical directionality (modes 35 to 66). A group index of 0 may specify the first group, a group index of 1 may specify the second group, and a group index of 2 may specify the third group.

When the CIIP mode is applied to the current block, the prediction sample of the current block may be generated based on a weighted sum of the inter prediction sample and the intra prediction sample. Here, the weight for the weighted sum may be determined based on at least one of the intra prediction mode of the current block, the position of the sub-region to which the prediction sample belongs, or the weight index.

The weight may be equally applied to the whole region of the inter prediction block and the intra prediction block of the current block. Alternatively, the current block may be divided into a plurality of sub-regions. For example, the current block may be divided into a plurality of sub-regions having the same size based on symmetrical partitioning. Alternatively, the current block may be divided into a plurality of sub-regions having different sizes based on asymmetrical partitioning. The partitioning direction of the current block may be determined based on information signaled to indicate the partitioning direction, or may be determined based on a predetermined coding parameter. Here, the coding parameter may include at least one of an intra prediction mode of the current block (e.g., a mode value, whether it is a non-directional mode, a directionality, an angle, etc.) or a position of a neighboring block coded with intra prediction. A weight applied to any one of the plurality of sub-regions may be different from a weight applied to at least one other. For this purpose, at least two weights may be determined for the current block. A weight may be applied to any one of the plurality of sub-regions, and no weight may be applied to at least one other sub-region. Hereinafter, the weight may be expressed as (w0, w1), and w0 may mean a first weight applied to an intra prediction sample, and w1 may mean a second weight applied to an inter prediction sample.

Specifically, the weight for the weighted sum may be determined based on the intra prediction mode of the current block (e.g., the value of the intra prediction mode, the directionality of the intra prediction mode, or the range to which the intra prediction mode belongs).

For example, the weight may be determined as at least one of a plurality of pre-defined weight candidates. Here, the plurality of weight candidates may include at least one of (3, 1), (2, 2), or (1, 3). Alternatively, the plurality of weight candidates may include at least one of (7, 1), (6, 2), (5, 3), (4, 4), (3, 5), (6, 2), or (1, 7).

When the intra prediction mode of the current block is a non-directional mode (e.g., planar mode or DC mode), the same weight may be applied to the whole regionrea of the current block. In this case, the weight may be determined as one of the plurality of weight candidates described above.

When the intra prediction mode of the current block is a horizontal directionality mode, the left sub-region and the right sub-region within the current block may have different weights. Here, the horizontal directionality mode may be defined as a mode within a range of modes 2 to 34. Alternatively, the horizontal directionality mode may be defined as a mode within a range of modes 13 to 23. When the intra prediction mode of the current block is a vertical directionality mode, the top sub-region and the bottom sub-region within the current block may have different weights. Here, the vertical directionality mode may be defined as a mode within a range of modes 35 to 66. Alternatively, the vertical directionality mode may be defined as a mode within a range of modes 45 to 55.

When the intra prediction mode of the current block is a wide-angle mode, the same weight may be applied to the whole region of the current block. In this case, the weight may be determined as one of the plurality of weight candidates described above.

The weight may be determined based on a signaled weight index. For example, when the CIIP mode is applicable (AvailableCiip=1), ciip_flag may be signaled. When ciip_flag is equal to 1, at least one of a merge index for inter prediction (merge_idx), a mode index for intra prediction (ciip_mpm_idx), or a weight index for weighted sum (weight_idx) may be signaled. The variable AvailableCiip may be set to 1 when the signaling condition of the above-described ciip_flag is satisfied, and may be set to 0 otherwise.

For example, a weight index of 0 may indicate (2, 2), a weight index of 1 may indicate (3, 1), and a weight index of 2 may indicate (1, 3).

Alternatively, the weight may be a weight applied to a specific region within the current block, as shown in Table 1 below. That is, depending on the intra prediction mode of the current block, the region where the weighted sum between the inter prediction sample and the intra prediction sample is performed may vary.

[Table 1]

| weight_idx | Intra prediction mode | INTRA | INTER |
|---|---|---|---|
| 0 | Left mode! & Above mode! | 2 (Whole region) | 2 (Whole region) |
| | Left mode | 2 (Left region) | 2 (Left region) |
| | Above mode | 2 (Above region) | 2 (Above region) |

(continued)

| weight_idx | Intra prediction mode | INTRA | INTER |
|---|---|---|---|
| 1 | Left mode! & Above mode! | 3 (Whole region) | 1 (Whole region) |
| | Left mode | 3 (Left region) | 1 (Left region) |
| | Above mode | 3 (Above region) | 1 (Above region) |
| 2 | Left mode! & Above mode! | 1 (Whole region) | 3 (Whole region) |
| | Left mode | 1 (Left region) | 3 (Left region) |
| | Above mode | 1 (Above region) | 3 (Above region) |

In Table 1, Left mode may mean a horizontal mode (i.e., mode 18) or a horizontal directionality mode. The horizontal directionality mode may be defined as a mode within the range of modes 2 to 34, or may be defined as a mode within the range of modes 13 to 23. Above mode may mean a vertical mode (i.e., mode 50) or a vertical directionality mode. The vertical directionality mode may be defined as a mode within the range of modes 35 to 66, or may be defined as a mode within the range of modes 45 to 55. (Left mode! & Above mode!) may mean a mode other than Left mode and Above mode. (Left mode! & Above mode!) may include a non-directional mode such as a planar mode and/or a DC mode. (Left mode! & Above mode!) may include a wide-angle mode as a directional mode.

In Table 1, Whole region may indicate that the weight is applied to the whole region of the current block. Left region may indicate that the weight is applied to the left sub-region within the current block. Above region may indicate that the weight is applied to the top sub-region within the current block. For example, the current block may be divided into two sub-regions in the vertical direction, and in this case, the left sub-region among the two sub-regions may correspond to Left region. Similarly, the current block may be divided into two sub-regions in the horizontal direction, and in this case, the top sub-region among the two sub-regions may correspond to Above region. Hereinafter, the sub-region to which the weight is applied (i.e., Left region or Above region) among the two sub-regions is called sub-region 0 (R0), and the other sub-region is called sub-region 1 (R1).

For sub-region 0 (R0), weighted sum may be performed based on the weight indicated by the weight index (weight_idx). For sub-region 1 (R1), a pre-defined prediction sample may be set as the prediction sample of the current block as it is. Here, the pre-defined prediction sample may be an inter prediction sample or an intra prediction sample. For example, the prediction sample for each sub-region may be derived as in the following equation 1.

[Equation 1]

$$\text{if } (x, y) \in R0, \ P(x, y) = (w0 * P_{Intra}(x, y) + w1 * P_{Inter}(x, y)) / (w0 + w1)$$

$$\text{otherwise (if } (x, y) \in R1), \ P(x, y) = P_{Inter}(x, y)$$

Alternatively, weighted sum may be performed for sub-region 0 (R0) based on a weight indicated by a weight index (weight_idx). Weighted sum may be performed for sub-region 1 (R1) based on a predetermined weight. Here, the predetermined weight may be a weight derived based on a weight indicated by a weight index (weight_idx). The predetermined weight may be derived by adding/subtracting a predetermined offset ($\alpha$) to the weight indicated by the weight index (weight_idx). $\alpha$ may be an integer greater than or equal to -w0 and less than or equal to w1. For example, a prediction sample for each sub-region may be derived as in the following equation 2.

[Equation 2]

$$\text{if } (x, y) \in R0, \ P(x, y) = (w0 * P_{Intra}(x, y) + w1 * P_{Inter}(x, y)) / (w0 + w1)$$

$$\text{otherwise (if } (x, y) \in R1), \ P(x, y) = ((w0 + \alpha) * P_{Intra}(x, y) + (w1 - \alpha) * P_{Inter}(x, y)) / (w0 + w1)$$

Alternatively, the current block may be divided into four sub-regions. The four sub-regions may be represented as sub-regions 0 to 3, i.e., R0 to R3. The current block may be divided into four sub-regions horizontally based on three horizontal lines. The current block may be divided into four sub-regions vertically based on four vertical lines. The current block may be divided into four sub-regions by one horizontal line and one vertical line crossing the center of the current block.

For sub-region 0 (R0), a weighted sum may be performed based on a weight indicated by a weight index (weight_idx). For sub-regions 1 to 3 (R1 to R3), a weighted sum may be performed based on a predetermined weight. Here, the weight for sub-region 1 may be derived by adding/subtracting a predetermined offset ($\alpha$) to the weight indicated by the weight index (weight_idx). The weight for sub-region 2 may be derived by adding/subtracting a predetermined offset ($\beta$) to the weight indicated by the weight index (weight_idx). The weight for sub-region 3 may be derived by adding/subtracting a predetermined offset ($\delta$) to the weight indicated by the weight index (weight_idx). The offsets ($\alpha$, $\beta$, $\delta$) are integers greater than or equal to -w0 and less than or equal to w1, and may not be 0. $\alpha$, $\beta$, and $\delta$ may be different values. For example, the prediction sample for each sub-region may be derived as in the following equation 3.

[Equation 3]

$$\text{if } (x, y) \in R0, P(x, y) = (w0 * P_{Intra}(x, y) + w1 * P_{Inter}(x, y)) / (w0 + w1)$$

$$\text{otherwise (if } (x, y) \in R1), P(x, y) = ((w0 + \alpha) * P_{Intra}(x, y) + (w1 - \alpha) * P_{Inter}(x, y)) / (w0 + w1)$$

$$\text{otherwise (if } (x, y) \in R2), P(x, y) = ((w0 + \beta) * P_{Intra}(x, y) + (w1 - \beta) * P_{Inter}(x, y)) / (w0 + w1)$$

$$\text{otherwise (if } (x, y) \in R3), P(x, y) = ((w0 + \delta) * P_{Intra}(x, y) + (w1 - \delta) * P_{Inter}(x, y)) / (w0 + w1)$$

Alternatively, since intra prediction based on directionality uses the characteristic of spatial adjacency between samples, the weights may be increased uniformly as the distance from the reference sample increases. Specifically, for sub-region 0 (R0), weighted sum may be performed based on the weight indicated by the weight index (weight_idx). For sub-regions 1 to 3 (R1 to R3), weighted sum may be performed based on predetermined weights. Here, the weight for sub-region 1 may be derived by adding/subtracting a predetermined offset ($\alpha$) to the weight indicated by the weight index (weight_idx). The weight for sub-region 2 may be derived by adding/subtracting a predetermined offset ($2\alpha$) to the weight indicated by the weight index (weight_idx). The weight for sub-region 3 may be derived by adding/subtracting a predetermined offset ($3\alpha$) to the weight indicated by the weight index (weight_idx). $\alpha$ is an integer greater than or equal to -w0 and less than or equal to w1, and may not be 0. As an example, the prediction sample for each sub-region may be derived as in the following equation 4.

[Equation 4]

$$\text{if } (x, y) \in R0, P(x, y) = (w0 * P_{Intra}(x, y) + w1 * P_{Inter}(x, y)) / (w0 + w1)$$

$$\text{otherwise (if } (x, y) \in R1), P(x, y) = ((w0 + \alpha) * P_{Intra}(x, y) + (w1 - \alpha) * P_{Inter}(x, y)) / (w0 + w1)$$

$$\text{otherwise (if } (x, y) \in R2), P(x, y) = ((w0 + 2\alpha) * P_{Intra}(x, y) + (w1 - 2\alpha) * P_{Inter}(x, y)) / (w0 + w1)$$

$$\text{otherwise (if } (x, y) \in R3), P(x, y) = ((w0 + 3\alpha) * P_{Intra}(x, y) + (w1 - 3\alpha) * P_{Inter}(x, y)) / (w0 + w1)$$

Information on GPM according to the present disclosure may include at least one of information for a GPM-INTRA-based merge mode or information for a GPM-based merge mode. Information on the GPM may include at least one of a partitioning index (merge_gpm_partition_idx) specifying a partitioning type or partitioning shape of the GPM, a flag (gpm_intra_flag0) indicating whether a first partition (P0) of the current block is predicted based on an intra mode, a mode index (gpm_intra_mode_idx0) specifying an intra prediction mode for the first partition from a candidate list, a merge index (merge_gpm_idx0) specifying a merge candidate for the first partition of the current block from a merge candidate list, a flag (gpm_intra_flag1) indicating whether a second partition (P1) of the current block is predicted based on an intra mode, a mode index (gpm_intra_mode_idx1) specifying an intra prediction mode for the second partition from the candidate list, or a merge index (merge_gpm_idx1) specifying a merge candidate for the second partition of the current block from a merge candidate list.

For example, gpm_intra_flag0 of 1 may indicate that the first partition is predicted based on the intra mode. gpm_intra_flag0 of 0 may indicate that the first partition is not predicted based on the intra mode. Alternatively, gpm_intra_flag0 of 0 may indicate that the motion information of the first partition is derived based on the merge mode. Accordingly, when gpm_intra_flag0 is equal to 1, gpm_intra_mode_idx0 may be signaled. An intra prediction mode for the first partition may be derived based on gpm_intra_mode_idx0, and an intra prediction block corresponding to the first partition may be generated based on the derived intra prediction mode. On the other hand, when gpm_intra_flag0 is equal to 0, merge_gpm_idx0 may be signaled. A merge candidate for the first partition may be determined from the merge candidate list of the current block based on merge_gpm_idx0, and motion information of the first partition may be derived based on motion information of the determined merge candidate. An inter prediction block corresponding to the first partition may be generated based on the derived motion information.

gpm_intra_flag1 of 1 may indicate that the second partition is predicted based on the intra mode. gpm_intra_flag1 of 0 may indicate that the second partition is not predicted based on the intra mode. Alternatively, gpm_intra_flag1 of 0 may indicate that the motion information of the second partition is derived based on the merge mode. gpm_intra_flag1 may be signaled when gpm_intra_flag0 is equal to 0.

When gpm_intra_flag1 is equal to 1, gpm_intra_mode_idx1 may be signaled. An intra prediction mode for the second partition may be derived based on gpm_intra_mode_idx1, and an intra prediction block corresponding to the second partition may be generated based on the derived intra prediction mode. On the other hand, when gpm_intra_flag1 is equal to 0, merge_gpm_idx1 may be signaled. A merge candidate for the second partition may be determined from a merge candidate list of the current block based on merge_gpm_idx1, and motion information of the second partition may be derived based on motion information of the determined merge candidate. An inter prediction block corresponding to the second partition may be generated based on the derived motion information.

The CIIP mode may generate a final prediction block through a weighted sum between an intra prediction block and an inter prediction block. The GPM-INTRA-based merge mode may divide a current block into two partitions and generate a prediction block based on the intra mode for one of them. They have in common that both generate intra prediction blocks. The present disclosure relates to a method for signaling residual information for the CIIP mode and the GPM-INTRA-based merge mode, and is a method for hormonization between the two.

According to the above example, the CIIP mode may be allowed when the current block is not coded in the skip mode. That is, when the CIIP mode is applied to the current block, the signaling of the residual information for the current block is not skipped. Similarly, the GPM-INTRA-based merge mode may also be restricted to be allowed when the current block is not coded in the skip mode. Conversely, the GPM-INTRA-based merge mode may not be allowed when the current block is coded in the skip mode.

To this end, at least one of the information on the aforementioned GPM may be adaptively signaled based on a flag (cu_skip_flag) indicating whether the current block is a block coded in the skip mode. For example, when cu_skip_flag is equal to 0, gpm_intra_flag0 may be signaled, and when cu_skip_flag is equal to 1, gpm_intra_flag0 may not be signaled. When gpm_intra_flag0 and cu_skip_flag are equal to 0, gpm_intra_flag1 may be signaled, and when at least one of gpm_intra_flag0 or cu_skip_flag is equal to 1, gpm_intra_flag1 may not be signaled.

Referring to FIG. 4, residual samples of the current block may be derived based on information on subblock transform (SBT) (S410).

Subblock transform may divide a current block into a plurality of subblocks, perform residual coding on some subblock(s) among the plurality of subblocks, and skip residual coding on the remaining subblock(s). Here, the residual coding may include at least one of 1) derivation of transform coefficients based on residual information, 2) dequantization for transform coefficients, or 3) inverse transform for transform coefficients.

For example, when a subblock transform is used for a current block, the current block may be divided into two subblocks. Residual coding may be performed on one of the two subblocks to derive residual samples. Residual coding may be skipped on the other of the two subblocks, and the residual samples of the corresponding subblock may be derived as 0.

Information on subblock transform according to the present disclosure may include at least one of an SBT flag (cu_sbt_flag), an SBT size flag (cu_sbt_quad_flag), an SBT direction flag (cu_sbt_horizontal_flag), or an SBT position flag (cu_sbt_pos_flag).

Specifically, the SBT flag (cu_sbt_flag) may indicate whether subblock transform is used for the current block. For example, an SBT flag of 1 may indicate that a subblock transform is used for the current block, and an SBT flag of 0 may indicate that a subblock transform is not used for the current block.

The SBT flag may be signaled when a predetermined first condition is satisfied, and may be set to 0 otherwise. The predetermined first condition may include at least one of the following conditions:

- sps_sbt_enabled_flag is equal to 1. That is, subblock transform is available.
- cbWidth is less than or equal to MaxTbSizeY. That is, the width of the current block (cbWidth) is less than or equal to the maximum transform block size (MaxTbSizeY).
- cbHeight is less than or equal to MaxTbSizeY. That is, the height of the current block (cbHeight) is less than or equal to the maximum transformation block size (MaxTbSizeY).
- The width and height of the current block are greater than or equal to 8.

As per the above conditions, the SBT flag may be signaled regardless of the ciip_flag. By allowing subblock transform in the CIIP mode, the signaling of residual information for some subblocks in the current block may be omitted, and the compression performance may be improved.

Alternatively, the SBT flag may be signaled when a predetermined second condition is satisfied, and may be derived as 0 otherwise. The predetermined second condition may include at least one of the following conditions:

- sps_sbt_enabled_flag is equal to 1. That is, subblock transform is available.
- ciip_flag is equal to 0. That is, CIIP mode is not applied to the current block.
- cbWidth is less than or equal to MaxTbSizeY. That is, the width of the current block (cbWidth) is less than or equal to the maximum transform block size (MaxTbSizeY).
- cbHeight is less than or equal to MaxTbSizeY. That is, the height of the current block (cbHeight) is less than or equal to the maximum transform block size (MaxTbSizeY).
- The width and height of the current block are greater than or equal to 8.

As per the above conditions, the SBT flag may be signaled regardless of the flag (gpm_intra_flag) indicating whether the GPM-Intra based merge mode is applied to the current block. By allowing subblock transform in the GPM-Intra based merge mode, the signaling of residual information for some subblocks in the current block may be omitted, thereby improving the compression performance.

The SBT size flag (cu_sbt_quad_flag) may indicate the size of a subblock on which residual coding is performed. For example, an SBT size flag of 1 may indicate that residual coding is performed on a subblock of 1/4 the size of the current block, and an SBT size flag of 0 may indicate that residual coding is performed on a subblock of 1/2 the size of the current block.

The SBT size flag may be signaled when a predetermined condition is satisfied, and may be set to 0 otherwise. The predetermined condition may include at least one of the following conditions:

- The width or height of the current block is greater than or equal to 8.
- The width or height of the current block is greater than or equal to 16.

The SBT direction flag (cu_sbt_horizontal_flag) may indicate whether the current block is split in the horizontal direction. For example, an SBT direction flag of 1 may indicate that the current block is split into two subblocks in the horizontal direction, and an SBT direction flag of 0 may indicate that the current block is split into two subblocks in the vertical direction.

The SBT direction flag may be signaled when a predetermined condition is satisfied. The predetermined condition may be any one of the following conditions:

- cu_sbt_quad_flag is equal to 1, and the width and height of the current block are greater than or equal to 16.
- cu_sbt_quad_flag is equal to 0, and the width and height of the current block are greater than or equal to 8.

The SBT direction flag may not be signaled when the above condition is not satisfied. However, the SBT direction flag may be derived based on the SBT size flag and/or the width of the current block. For example, in case that cu_sbt_quad_flag is equal to 1, when the width of the current block is greater than or equal to 16, cu_sbt_horizontal_flag may be derived as 1, otherwise (i.e., when the width of the current block is less than 16), cu_sbt_horizontal_flag may be derived as 0. In case that cu_sbt_quad_flag is equal to 0, when the width of the current block is greater than or equal to 8, cu_sbt_horizontal_flag may be derived as 1, otherwise (i.e., when the width of the current block is less than 8), cu_sbt_horizontal_flag may be derived as 0.

The SBT position flag (cu_sbt_pos_flag) may indicate the position of a subblock on which residual coding is performed. For example, an SBT position flag of 1 may indicate that residual coding is performed on a second subblock of two subblocks in a current block, and an SBT position flag of 0 may indicate that residual coding is performed on a first subblock of the two subblocks. Depending on the partitioning direction of the current block, the second subblock may mean a right or bottom subblock, and the first subblock may mean a left or top subblock.

By using the characteristics of the CIIP mode, all or some of the information on subblock transform may be derived, thereby reducing the number of bits required for signaling the information on subblock transform. Intra prediction has a characteristic that the prediction performance improves as the distance from the reference sample gets closer. Therefore, all or some of the information on subblock transform may be derived by considering the directionality of the intra prediction mode for the current block. Depending on the intra prediction mode of the current block, cu_sbt_flag may be derived as a specific value without being signaled. Depending on the intra prediction mode of the current block, cu_sbt_quad_flag may be derived as a specific value without being signaled. Depending on the intra prediction mode of the current block, cu_sbt_horizontal_flag may be derived as a specific value without being signaled. Depending on the intra prediction mode of the current block, cu_sbt_pos_flag may be derived as a specific value without being signaled.

As an example, Table 2 shows examples where cu_sbt_flag, cu_sbt_quad_flag, cu_sbt_horizontal_flag, and cu_sbt_pos_flag are signaled or mapped to specific values depending on the characteristics of the intra prediction mode for the CIIP mode.

[Table 2]

| Intra prediction mode | cu_sbt_flag | cu_sbt_quad _flag | cu_sbt_hori zontal_flag | cu_sbt_pos_ flag |
|---|---|---|---|---|
| MODE < 0 | 0 (Inferred) | N/A | N/A | N/A |
| 0 <= MODE <= 1 | 0 (Inferred) | N/A | N/A | N/A |
| 2 <= MODE <= 12 | 0 (Inferred) | N/A | N/A | N/A |
| 13 <= MODE <= 23 | 1 (inferred) | 0 (inferred) | 0 (inferred) | 1 (inferred) |
| 24 <= MODE <= 44 | 0 (Inferred) | N/A | N/A | N/A |
| 45 <= MODE <= 55 | 1 (inferred) | 0 (inferred) | 1 (inferred) | 1 (inferred) |
| 56 <= MODE <= 80 | 0 (Inferred) | N/A | N/A | N/A |

Referring to Table 2, when the intra prediction mode of the current block corresponds to the non-directional mode or the wide-angle mode, this may mean that the similarity between the current block and the adjacent sample is relatively low. In this case, cu_sbt_flag for the current block may not be signaled and may be derived as 0. When the intra prediction mode of the current block belongs to the first range, this may mean that the similarity between the current block and the adjacent sample is relatively low. For example, the first range may include at least one of the range of modes 2 to 12, the range of modes 24 to 44, or the range of modes 56 to 80. In this case, cu_sbt_flag for the current block may not be signaled and may be derived as 0. When the intra prediction mode of the current block belongs to the second range, cu_sbt_flag for the current block may not be signaled and may be derived as 1. For example, the second range may include at least one of the range of modes 13 to 23 or the range of modes 45 to 55. In addition, when the intra prediction mode of the current block belongs to the second range, cu_sbt_quad_flag for the current block may not be signaled and may be derived as 0. When the intra prediction mode of the current block corresponds to a horizontal directionality mode (for example, when the intra prediction mode of the current block belongings to the range of modes 13 to 23), cu_sbt_horizontal_flag for the current block may be derived as 0. When the intra prediction mode of the current block corresponds to a vertical directionality mode (for example, when the intra prediction mode of the current block belongs to the range of modes 45 to 55), cu_sbt_horizontal_flag for the current block may be derived as 1. When the intra prediction mode of the current block belongs to the second range, cu_sbt_pos_flag for the current block may not be signaled and may be derived as 1.

In other words, when the current block has a horizontal or vertical directionality mode, it may be determined that subblock transform is applied to the current block. When the current block has a horizontal or vertical directionality mode, it may be determined that the current block is split into two subblocks having the same size. When the current block has a horizontal directionality mode, it may be determined that the current block is split in the vertical direction considering the distance to the adjacent sample of the current block. when the current block has a vertical directionality mode, it may be determined that the current block is split in the horizontal direction considering the distance to the adjacent sample of the current block. In this case, it may be determined that the residual information of the first subblock having a close distance to the reference sample among the two subblocks is not signaled, and the residual information of the second subblock having a far distance to the reference sample is signaled.

Table 3 shows how to signal/derive information on subblock transform based on the range to which the intra prediction mode of the current block belongs.

[Table 3]

| Intra prediction mode | cu_sbt_fla g | cu_sbt_qua d_flag | cu_sbt_hor izontal_fl ag | cu_sbt_pos _flag |
|---|---|---|---|---|
| if(2 <= MODE <= 34) | 1 (inferred) | 1 (inferred) | 0 (inferred) | 1 (inferred) |
| else if (34 <= MODE <= 66) | 1 (inferred) | 1 (inferred) | 1 (inferred) | 1 (inferred) |
| else | signalled | signalled | signalled | signalled |

Referring to Table 3, the pre-defined intra prediction modes may be divided into three ranges. Specifically, the pre-defined intra prediction modes may be divided into a first range including modes 2 to 34, a second range including modes 34 to 66, and a third range including at least one of non-directional modes or wide-angle modes. When the intra prediction mode of the current block corresponds to a directional mode (e.g., when the intra prediction mode of the current block belongs to the first or second range), cu_sbt_flag for the current block may be derived as 1 without being signaled. When the intra prediction mode of the current block corresponds to a directional mode (e.g., when the intra prediction mode of the current block belongs to the first or second range), cu_sbt_quad_flag for the current block may be derived as 1 without being signaled. When the intra prediction mode of the current block corresponds to a horizontal directionality mode (e.g., when the intra prediction mode of the current block belongs to the first range), cu_sbt_horizontal_flag for the current block may be derived as 0. When the intra prediction mode of the current block corresponds to a vertical directionality mode (e.g., when the intra prediction mode of the current block belongs to the second range), cu_sbt_horizontal_flag for the current block may be derived as 1. When the intra prediction mode of the current block corresponds to a directional mode (e.g., when the intra prediction mode of the current block belongs to the first or second range), cu_sbt_pos_flag for the current block may be derived as 1 without being signaled. On the other hand, when the intra prediction mode of the current block corresponds to a non-directional mode or a wide-angle mode (e.g., when the intra prediction mode of the current block belongs to the third range), information on subblock transform for the current block may be signaled via the bitstream.

In other words, when the current block has a horizontal or vertical directionality mode, it may be determined that subblock transform is applied to the current block. When the current block has a horizontal or vertical directionality mode, it may be determined that the current block is split into two subblocks having 1/4 and 3/4 sizes of the current block. When the current block has a horizontal directionality mode, it may be determined that the current block is split in the vertical direction considering the distance to the adjacent sample of the current block. When the current block has a vertical directionality mode, it may be determined that the current block is split in the horizontal direction considering the distance to the adjacent sample of the current block. In this case, it may be determined that the residual information of the first subblock having a close distance to the reference sample among the two subblocks is not signaled, and the residual information of the second subblock having a far distance to the reference sample is signaled.

Table 4 shows how some of the information on subblock transform is signaled and others are derived based on the range to which the intra prediction mode of the current block belongs.

[Table 4]

| Intra prediction mode | cu_sbt_flag | cu_sbt_quad _flag | cu_sbt_hori zontal_flag | cu_sbt_pos_ flag |
|---|---|---|---|---|
| if (2 <= MODE <= 34) | 1 (inferred) | signalled | 0 (inferred) | signalled |
| else if (34 <= MODE <= 66) | 1 (inferred) | signalled | 1 (inferred: Hor) | signalled |
| else | 0 (Inferred) | N/A | N/A | N/A |

Referring to Table 4, the pre-defined intra prediction modes may be divided into three ranges. Specifically, the pre-defined intra prediction modes may be divided into a first range including modes 2 to 34, a second range including modes 34 to 66, and a third range including at least one of non-directional modes or wide-angle modes. When the intra prediction mode of the current block corresponds to a directional mode (e.g., when the intra prediction mode of the current block belongs to the first or second range), cu_sbt_flag for the current block may be derived as 1 without being signaled. On the other hand, when the intra prediction mode of the current block does not correspond to a directional mode (for example, when the intra prediction mode of the current block belongs to the third range), cu_sbt_flag for the current block may not be signaled and may be derived as 0. cu_sbt_quad_flag may be signaled regardless of the intra prediction mode of the current block (or the range to which the intra prediction mode of the current block belongs). When the intra prediction mode of the current block corresponds to a horizontal directionality mode (for example, when the intra prediction mode of the current block belongs to the first range), cu_sbt_horizontal_flag for the current block may be derived as 0. When the intra prediction mode of the current block corresponds to a vertical directionality mode (e.g., when the intra prediction mode of the current block belongs to the second range), cu_sbt_horizontal_flag for the current block may be derived as 1. cu_sbt_pos_flag may be signaled regardless of the intra prediction mode of the current block (or the range to which the intra prediction mode of the current block belongs).

In other words, when the current block has a directional mode, it may be determined that the subblock transform is applied to the current block, and otherwise, it may be determined that the subblock transform is not applied to the current block. When the current block has a horizontal directionality mode, it may be determined that the current block is divided in the vertical direction considering the distance to the adjacent sample of the current block. When the current block has a vertical directionality mode, it may be determined that the current block is divided in the horizontal direction considering the distance to the adjacent sample of the current block.

The method for signaling/deriving information on subblock transform described above may be applied in the case where the intra prediction mode of the current block is derived before the information on subblock transform is signaled. Alternatively, even in the case where the intra prediction mode of the current block is not derived before the information on subblock transform is signaled, the method described above may be applied in the case where the range to which the intra prediction mode of the current block belongs can be derived using a simple prediction method.

The simple prediction method may specify the range to which the intra prediction mode of the current block belongs, the directionality of the intra prediction mode of the current block, etc., based on the gradient (or the variation, the histogram of the gradient) between reference samples in the adjacent region (or template region) of the current block. Alternatively, the simple prediction method may specify the range to which the intra prediction mode of the current block belongs, the directionality of the intra prediction mode of the current block, etc., based on statistical information (e.g., mode, minimum, maximum, mean, median, etc.) on the intra prediction mode in the adjacent region of the current block.

The above-described method is only an example, and the type of information on the derived subblock transform, the derived specific value, etc. may be changed. In addition, the range dividing the pre-defined intra prediction modes may be defined in a more detailed manner, and for this purpose, the size and/or shape of the current block may be considered.

When the CIIP mode is applied to the current block, at least one of the information on subblock transform may be derived as a specific value without being signaled based on at least one of a weight (or weight index), an intra prediction mode, a range of a region to which the weight is applied, or a position of a sub-region to which the weight is applied in the aforementioned CIIP mode.

Specifically, cu_sbt_flag may be derived as a specific value without being signaled depending on the weight for the CIIP sum in the CIIP mode. cu_sbt_quad_flag may be derived as a specific value without being signaled depending on the weight for the CIIP sum in the CIIP mode. cu_sbt_horizontal_flag may be derived as a specific value without being signaled depending on the weight for the CIIP sum in the CIIP mode. cu_sbt_pos_flag may be derived as a specific value without being signaled depending on the weight for the weighted sum in the CIIP mode. cu_sbt_flag may be derived as a specific value without being signaled depending on the application range of the signaled/derived weight for the weighted sum in the INTRA mode and the INTER mode. cu_sbt_quad_flag may be derived as a specific value without being signaled depending on the range of the region to which the weight for the weighted sum in the CIIP mode is applied. Depending on the range of the region to which the weight for the weighted sum in the CIIP mode is applied, cu_sbt_horizontal_flag may be derived as a specific value without being signaled. Depending on the range of the region to which the weight for the weighted sum in the CIIP mode is applied, cu_sbt_pos_flag may be derived as a specific value without being signaled. Depending on the intra prediction mode for the CIIP mode, cu_sbt_flag may be derived as a specific value without being signaled. Depending on the intra prediction mode for the CIIP mode, cu_sbt_quad_flag may be derived as a specific value without being signaled. Depending on the intra prediction mode for the CIIP mode, cu_sbt_horizontal_flag may be derived as a specific value without being signaled. Depending on the intra prediction mode for the CIIP mode, cu_sbt_pos_flag may be derived as a specific value without being signaled.

As an example, Table 5 is an example in which all or some of the information on subblock transform is derived to a specific value based on at least one of the weight (or weight index) for weighted sum in CIIP mode or the intra prediction mode.

[Table 5]

| weigh t_idx (w0 : w1) | Intra predictio n mode | cu_sbt_fl ag | cu_sbt_qu ad_flag | cu_sbt_ho rizontal_ flag | cu_sbt_po s_flag |
|---|---|---|---|---|---|
| 0 (2:2) | Left mode! & Above mode! | 1 (Inferred ) | 1 (inferred ) | 1 (inferred ) | 1 (inferred ) |
| | Left mode | 1 (Inferred ) | 0 (inferred ) | 0 (inferred ) | 1 (inferred ) |
| | Above mode | 1 (Inferred ) | 0 (inferred ) | 1 (inferred ) | 1 (inferred ) |

(continued)

| weigh t_idx (w0 : w1) | Intra predictio n mode | cu_sbt_fl ag | cu_sbt_qu ad_flag | cu_sbt_ho rizontal_ flag | cu_sbt_po s_flag |
|---|---|---|---|---|---|
| 1 (3:1) | Left mode! & Above mode! | 0 (Inferred ) | N/A | N/A | N/A |
| | Left mode | 0 (Inferred ) | N/A | N/A | N/A |
| | Above mode | 0 (Inferred ) | N/A | N/A | N/A |
| 2 (1:3) | Left mode! & Above mode! | 1 (Inferred ) | 1 (inferred ) | 1 (inferred ) | 1 (inferred ) |
| | Left mode | 1 (Inferred ) | 0 (inferred ) | 0 (inferred ) | 1 (inferred ) |
| | Above mode | 1 (Inferred ) | 0 (inferred ) | 1 (inferred ) | 1 (inferred ) |

In Table 5, Left mode, Above mode, (Left mode! & Above mode!) are the same as those in Table 1, and any duplicate explanations will be omitted here.

Based on the weight index (weight_idx), it may be determined whether the subblock transform is applied to the current block. For example, when the weight index is equal to 0 or 2, it may be determined that the subblock transform is applied to the current block. In this case, cu_sbt_flag may be derived as 1 without being signaled. When the weight index is equal to 1, it may be determined that the subblock transform is not applied to the current block. In this case, cu_sbt_flag may be derived as 0 without being signaled. Alternatively, when the first weight (w0) applied to the intra prediction sample is less than or equal to the second weight (w1) applied to the inter prediction sample, it may be determined that the subblock transform is applied to the current block. In this case, cu_sbt_flag may be derived as 1 without being signaled. When the first weight (w0) applied to the intra prediction sample is greater than the second weight (w1) applied to the inter prediction sample, it may be determined that no subblock transform is applied to the current block. In this case, cu_sbt_flag may be derived as 0 without being signaled.

When it is determined that the subblock transform is applied to the current block, at least one of cu_sbt_quad_flag, cu_sbt_horizontal_flag, or cu_sbt_pos_flag may be derived as a specific value based on the intra prediction mode of the current block. The SBT information may be set to a specific value according to the classification of each INTRA mode. For example, when the intra prediction mode of the current block does not correspond to the Left mode and the Above mode, this may mean that the similarity between the current block and the adjacent sample is relatively low. In this case, it may be determined that the current block is divided into two sub-blocks having 1/4 and 3/4 sizes of the current block, and cu_sbt_quad_flag may not be signaled and may be derived as 1. On the other hand, when the intra prediction mode of the current block corresponds to Left mode or Above cu_sbt_quad_flag it may be determined that the current block is divided into two subblocks with the same size, and cu_sbt_quad_flag may be derived as 0 without being signaled. Here, the case where the intra prediction mode of the current block does not correspond to the Left mode and the Above mode may mean that the intra prediction mode of the current block corresponds to a non-directional mode such as the planar mode or the DC mode. The case where the intra prediction mode of the current block does not correspond to the Left mode and the Above mode may mean that the intra prediction mode of the current block belongs to the wide-angle modes (modes -14 to - 1, modes 67 to 80). The case where the intra prediction mode of the current block does not correspond to the Left mode and the Above mode may mean that it belongs to a predetermined directional modes (for example, modes 2 to 12, modes 24 to 44, modes 56 to 66).

Based on the distance to the reference sample for intra prediction of the current block (or the position of the reference sample), the partitioning direction of the current block may be determined. When the intra prediction mode of the current block corresponds to the Left mode, this may mean that the reference sample of the current block is located at the left side of the cu_sbt_horizontal_flag block. In this case, the current block may be determined to be split in the vertical direction, and cu_sbt_horizontal_flag may not be signaled and may be derived as 0. When the intra prediction mode of the current block corresponds to the Above mode, this may mean that the reference sample of the current block is located at the top of the cu_sbt_horizontal_flag block. In this case, the current block may be determined to be split in the horizontal direction, and cu_sbt_horizontal_flag may be derived as 1 without being signaled. When the intra prediction mode of the current block does not correspond to the Left mode and the Above mode, the current block may be determined to be split in the pre-defined direction (e.g., the horizontal or vertical direction), and cu_sbt_horizontal_flag may be derived as 1 or 0 without being signaled. When the intra prediction mode of the current block does not correspond to the Left mode and the Above mode, cu_sbt_horizontal_flag for the current block may also be signaled.

It may be determined that the residual information of the first subblock among the subblocks of the current block, which is close to the reference sample, is not signaled, and the residual information of the second subblock, which is far from the reference sample, is signaled. That is, cu_sbt_pos_flag may be derived as 1 without being signaled.

Alternatively, as shown in Table 6, whether to signal information on subblock transform and/or how to derive information on subblock transform may be determined based on the weight index.

[Table 6]

| weight _idx (w0 : w1) | Intra predictio n mode | cu_sbt_fl ag | cu_sbt_qu ad_flag | cu sbt ho rizontal_ flag | cu_sbt_po s_flag |
|---|---|---|---|---|---|
| 0 (2:2) | Left mode! & Above mode! | 1 (Inferred ) | 1 (inferred ) | 1 (inferred ) | 1 (inferred ) |
| | Left mode (2~34) | 1 (Inferred ) | 0 (inferred ) | 0 (inferred ) | 1 (inferred ) |
| | Above mode (35~60) | 1 (Inferred ) | 0 (inferred ) | 1 (inferred ) | 1 (inferred ) |
| 1 (3:1) | Left mode! & Above mode! | signalled | signalled | signalled | signalled |
| | Left mode (2~34) | signalled | signalled | signalled | signalled |
| | Above mode (35~60) | signalled | signalled | signalled | signalled |
| 2 (1:3) | Left mode! & Above mode! | 1 (Inferred ) | 1 (inferred ) | 1 (inferred ) | 1 (inferred ) |
| | Left mode (2~34) | 1 (Inferred ) | 0 (inferred ) | 0 (inferred ) | 1 (inferred ) |
| | Above mode (35~60) | 1 (Inferred ) | 0 (inferred ) | 1 (inferred ) | 1 (inferred ) |

In Table 6, Left mode, Above mode, (Left mode! & Above mode!) are the same as those in Table 1, and any duplicate explanations will be omitted here.

Based on the weight index (weight_idx), it may be determined whether information on subblock transform of the current block is signaled. For example, when the weight index is equal to 1, information on subblock transform of the current block may be signaled. When the weight index is equal to 0 or 2, at least one of the information on subblock transform of the current block may be derived as a specific value. Alternatively, when the first weight (w0) applied to the intra prediction sample is greater than the second weight (w1) applied to the inter prediction sample, information on subblock transform of the current block may be signaled. When the first weight (w0) applied to the intra prediction sample is less than or equal to the second weight (w1) applied to the inter prediction sample, at least one of the information on subblock transform of the current block may be derived.

Meanwhile, based on at least one of the weight index or the intra prediction mode, at least one of cu_sbt_flag, cu_sbt_quad_flag, cu_sbt_horizontal_flag, or cu_sbt_pos_flag may be derived as a specific value, as seen with reference to Table 5.

The method for signaling/deriving information on subblock transform described above may be applied in the case where the intra prediction mode of the current block is derived before the information on subblock transform is signaled. Alternatively, even in the case where the intra prediction mode of the current block is not derived before the information on subblock transform is signaled, the method described above may be applied in the case where the range to which the intra prediction mode of the current block belongs can be derived using the simple prediction method described above.

When the GPM mode is applied to the current block, subblock transform may be allowed for the current block. Based on the information on the GPM for the current block, at least one of the information on the subblock transform may be derived as a specific value without being signaled.

At least one of the information on the subblock transform may not be signaled and may be derived as a specific value based on a partitioning index (merge_gpm_partition_idx) that specifies a geometric partitioning type. Depending on merge_gpm_partition_idx, cu_sbt_flag may be derived as a specific value without being signaled. Depending on merge_gpm_partition_idx, cu_sbt_quad_flag may be derived as a specific value without being signaled. Depending on merge_gpm_partition_idx, cu_sbt_horizontal_flag may be derived as a specific value without being signaled. Depending on merge_gpm_partition_idx, cu_sbt_pos_flag may be derived as a specific value without being signaled.

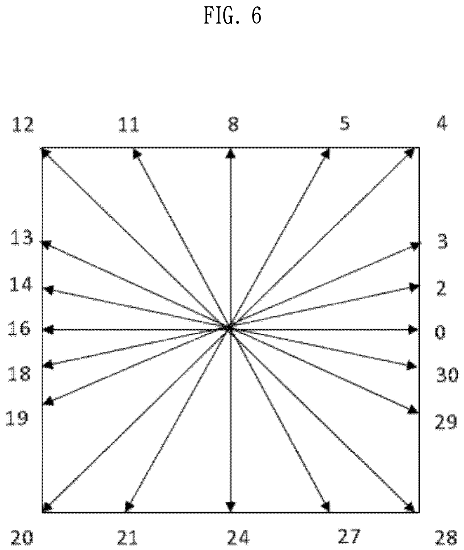

The following Table 7 shows angleIdx and distanceIdx mapped to merge_gpm_partition_idx. angleIdx represents the angle of the boundary line according to the geometric partitioning, and the angle of the boundary line corresponding to each angleIdx is as shown in Fig. 6. distanceIdx may represent the distance from the center position of the current block to the boundary line.

[Table 7]

| merge_gpm_parti tion_idx | 0 | 1 | 2 | 3 | 4 | 5 | 6 | 7 | 8 | 9 | 1 0 | 1 1 | 1 2 | 1 3 | 1 4 | 1 5 |
|---|---|---|---|---|---|---|---|---|---|---|---|---|---|---|---|---|
| angleIdx | 0 | 0 | 2 | 2 | 2 | 2 | 3 | 3 | 3 | 3 | 4 | 4 | 4 | 4 | 5 | 5 |
| distanceIdx | 1 | 3 | 0 | 1 | 2 | 3 | 0 | 1 | 2 | 3 | 0 | 1 | 2 | 3 | 0 | 1 |

(continued)

| merge_gpm_partition_idx | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| cu_sbt_flag | 1 | 1 | 1 | 1 | 1 | 1 | 0 | 0 | 0 | 0 | 0 | 0 | 0 | 0 | 0 | 0 |
| merge_gpm_partition_idx | 16 | 17 | 18 | 19 | 20 | 21 | 22 | 23 | 24 | 25 | 26 | 27 | 28 | 29 | 30 | 31 |
| angleIdx | 5 | 5 | 8 | 8 | 11 | 11 | 11 | 11 | 12 | 12 | 12 | 12 | 13 | 13 | 13 | 13 |
| distanceIdx | 2 | 3 | 1 | 3 | 0 | 1 | 2 | 3 | 0 | 1 | 2 | 3 | 0 | 1 | 2 | 3 |
| cu_sbt_flag | 0 | 0 | 1 | 1 | 0 | 0 | 0 | 0 | 0 | 0 | 0 | 0 | 0 | 0 | 0 | 0 |
| merge_gpm_partition_idx | 32 | 33 | 34 | 35 | 36 | 37 | 38 | 39 | 40 | 41 | 42 | 43 | 44 | 45 | 46 | 47 |
| angleIdx | 14 | 14 | 14 | 14 | 16 | 16 | 18 | 18 | 18 | 19 | 19 | 19 | 20 | 20 | 20 | 21 |
| distanceIdx | 0 | 1 | 2 | 3 | 1 | 3 | 1 | 2 | 3 | 1 | 2 | 3 | 1 | 2 | 3 | 1 |
| cu_sbt_flag | 1 | 1 | 1 | 1 | 1 | 1 | 1 | 1 | 1 | 0 | 0 | 0 | 0 | 0 | 0 | 0 |
| merge_gpm_partition_idx | 48 | 49 | 50 | 51 | 52 | 53 | 54 | 55 | 56 | 57 | 58 | 59 | 60 | 61 | 62 | 63 |
| angleIdx | 21 | 21 | 24 | 24 | 27 | 27 | 27 | 28 | 28 | 28 | 29 | 29 | 29 | 30 | 30 | 30 |
| distanceIdx | 2 | 3 | 1 | 3 | 1 | 2 | 3 | 1 | 2 | 3 | 1 | 2 | 3 | 1 | 2 | 3 |
| cu_sbt_flag | 0 | 0 | 1 | 1 | 0 | 0 | 0 | 0 | 0 | 0 | 0 | 0 | 0 | 1 | 1 | 1 |

Referring to Table 7, depending on angleIdx, cu_sbt_flag may not be signaled and may be derived as a specific value. Specifically, when angleIdx represents an angle corresponding to a vertical direction (e.g., angleIdx = 0, 16), it may be determined that a subblock transform is applied to the current block, and cu_sbt_flag may be derived as 1. When angleIdx represents an angle corresponding to a horizontal direction (e.g., angleIdx = 8, 24), it may be determined that a subblock transform is applied to the current block, and cu_sbt_flag may be derived as 1. When angleIdx represents an angle adjacent to the vertical direction (e.g., angleIdx = 2, 14, 18, 30), it may be determined that a subblock transform is applied to the current block, and cu_sbt_flag may be derived as 1. When angleIdx represents any other angle, it may be determined that no subblock transform is applied to the current block, and cu_sbt_flag may be derived as 0.

The angles adjacent to the vertical direction described above are only examples. Even when angleIdx corresponds to at least one of 3, 5, 11, 13, 19, 21, 27, or 29, it may be determined that the subblock transform is applied to the current block, and cu_sbt_flag may be derived as 1. When angleIdx represents an angle corresponding to the vertical and horizontal directions (i.e., angleIdx = 0, 16, 8, 24), cu_sbt_flag may be derived as 1, otherwise, cu_sbt_flag may be derived as 0.

The pre-defined angleIdx (or angle according to angleIdx) in the encoding apparatus and the decoding apparatus may be divided into a plurality of groups. For example, the pre-defined angleIdx may be divided into at least two of a first group composed of angleIdx having vertical directionality, a second group composed of angleIdx having horizontal directionality, or a third group composed of the remaining angleIdx. Here, the angleIdx having vertical directionality may mean a vertical angleIdx (i.e., 0, 16). Alternatively, the angleIdx having vertical directionality may mean a vertical angleIdx and one or more angleIdx adjacent thereto (i.e., at least one of 2, 3, 4, 12, 13, 14, 18, 19, 20, 28, 29, or 30). An angleIdx having horizontal directionality may mean a horizontal angleIdx (i.e., 8, 24). Alternatively, an angleIdx having horizontal directionality may mean a horizontal angleIdx and one or more angleIdx adjacent thereto (i.e., at least one of 4, 5, 11, 12, 20, 21, 27, or 28).

Based on the directionality of angleIdx according to the partitioning index of the current block, information on subblock transform may be derived as a specific value. As an example, Table 8 shows how information on subblock transform is derived based on the group to which angleIdx according to the partitioning index of the current block belongs.

[Table 8]

| | cu_sbt_flag | cu_sbt_quad_flag | cu_sbt_hori zontal_flag | cu_sbt_pos_flag |
|---|---|---|---|---|
| VER | 1 (Inferred) | 0 (inferred) | 0 (inferred) | 1 (inferred) |
| HOR | 1 (Inferred) | 0 (inferred) | 1 (inferred) | 1 (inferred) |

(continued)

|  | cu_sbt_flag | cu_sbt_quad _flag | cu_sbt_hori zontal_flag | cu_sbt_pos_ flag |
|---|---|---|---|---|
| !VER && !HOR | 0 (Inferred) | N/A | specific N/A | N/A |

In Table 8, VER may correspond to the first group consisting of angleIdx with vertical directionality. HOR may correspond to the second group consisting of angleIdx with horizontal directionality. (!VER && !HOR) may correspond to the third group consisting of the remaining angleIdx.

When angleIdx for the current block belongs to the first or second group (i.e., angleIdx corresponds to an angle with vertical or horizontal directionality), it may be determined that subblock transform is applied to the current block, and cu_sbt_flag may be derived as 1. Otherwise, it may be determined that subblock transform is not applied to the current block, and cu_sbt_flag may be derived as 0.

When it is determined that a subblock transform is applied to the current block, the current block may be determined to be split into two subblocks with the same size, and cu_sbt_quad_flag may be derived as 0. However, this is only an example, and the size of the subblock may be determined based on the signaled cu_sbt_quad_flag.

When it is determined that the subblock transform is applied to the current block, the partitioning direction of the current block may be determined based on the angleIdx of the current block (or the group to which the angleIdx belongs). For example, when the angleIdx of the current block belongs to the first group, the current block may be determined to be split in the vertical direction, and cu_sbt_horizontal_flag may be derived as 0. When the angleIdx of the current block belongs to the second group, the current block may be determined to be split in the horizontal direction, and cu_sbt_horizontal_flag may be derived as 1. However, this is only an example, and the partitioning direction may also be determined based on the signaled cu_sbt_horizontal_flag.

It may be determined that the residual information of the first subblock among the two subblocks in the current block is not signaled, and the residual information of the second subblock is signaled. The cu_sbt_pos_flag of the current block may not be signaled and may be derived as 1. However, this is only an example, and the position of the subblock whose residual information is signaled may be determined based on the signaled cu_sbt_pos_flag.

At least one of the information on subblock transform may not be signaled and may be derived as a specific value based on at least one of angleIdx or distanceIdx in the GPM mode. As an example, Table 9 shows how the information on subblock transform is derived based on the group to which angleIdx belongs and distanceIdx according to the partitioning index of the current block.

[Table 9]

| GROUP | distance Idx | cu_sbt_f lag | cu_sbt_q uad_flag | cu_sbt_h orizonta l_flag | cu_sbt_p os_flag |
|---|---|---|---|---|---|
| VER | 0, 1 | 1 (Inferre d) | 0 (inferre d) | 0 (inferre d) | 1 (inferre d) |
| | 2, 3 | 1 (Inferre d) | 1 (inferre d) | 0 (inferre d) | 1 (inferre d) |
| HOR | 0, 1 | 1 (Inferre d) | 0 (inferre d) | 1 (inferre d) | 1 (inferre d) |
| | 2, 3 | 1 (Inferre d) | 1 (inferre d) | 1 (inferre d) | 1 (inferre d) |
| !VER & !HOR | 0, 1, 2, 3 | 0 (Inferre d) | N/A | N/A | N/A |

When angleIdx for the current block belongs to the first or second group (i.e., angleIdx corresponds to an angle with vertical or horizontal directionality), it may be determined that subblock transform is applied to the current block, and cu_sbt_flag may be derived as 1. Otherwise, it may be determined that subblock transform is not applied to the current block, and cu_sbt_flag may be derived as 0.

When it is determined that the subblock transform is applied to the current block, the size of the subblock may be determined based on distanceIdx according to the partitioning index of the current block. For example, when distanceIdx is 0 or 1, the current block may be determined to be split into two subblocks having the same size, and cu_sbt_quad_flag may be derived as 0. When distanceIdx is 2 or 3, the current block may be determined to be split into two sub-blocks having 1/4 and 3/4 sizes of the current block, and cu_sbt_quad_flag may be derived as 1. When distanceIdx is 0 or 1, this may mean that the blended region at the partitioning boundary is close to half of the current block. In this case, it may be determined to split the current block into subblocks having the same size. On the other hand, when distanceIdx is 2 or 3, it may mean that the blended region at the partitioining boundary is close to 1/4 of the current block. In this case, it may be determined to split the current block into two subblocks having 1/4 and 3/4 sizes of the current block.

The partitioning direction for subblock transform may be determined in a direction similar to the partitioning direction of the GPM mode. For example, when the angleIdx of the current block belongs to the first group, the current block may be determined to be split in the vertical direction, and cu_sbt_horizontal_flag may be derived as 0. When the angleIdx of the current block belongs to the second group, the current block may be determined to be split in the horizontal direction, and cu_sbt_horizontal_flag may be derived as 1. However, this is only an example, and the partitioning direction may be determined based on the signaled cu_sbt_horizontal_flag.

It may be determined that the residual information of the first subblock among the two subblocks in the current block is not signaled, and the residual information of the second subblock is signaled. The cu_sbt_pos_flag of the current block may not be signaled and may be derived as 1. However, this is only an example, and the position of the subblock whose residual information is signaled may be determined based on the signaled cu_sbt_pos_flag.

Alternatively, signaling of residual information for a subblock with statistically less residual information may be skipped. When a GPM-INTRA-based merge mode is applied to the current block, a subblock relatively more including a partition from which motion information is derived based on the merge mode may be determined, and signaling of residual information for the corresponding subblock may be skipped.

As described above, when the GPM mode is applied to the current block, at least one of the information on the subblock transform may be derived based on at least one of angleIdx or distanceIdx according to the partitioning index. In addition, when the GPM-INTRA-based merge mode is applied to the current block, at least one of the information on the subblock transform may not be signaled and may be derived as a specific value based on the intra prediction mode for the current block as in the method described above, and a detailed description thereof is omitted here.

The above-described step S410 may be performed when the current block is coded in the merge mode, and may be omitted when the current block is a block coded in the skip mode.

Referring to FIG. 4, the current block may be reconstructed based on the prediction samples and residual samples of the current block (S420).

Specifically, when the current block is a block coded in the merge mode, the reconstruction samples of the current block may be generated based on the prediction samples and residual samples of the current block. When the current block is a block coded in the skip mode, since the residual samples for the current block are not encoded and signaled, the prediction samples of the current block may be set as the reconstruction samples of the current block.

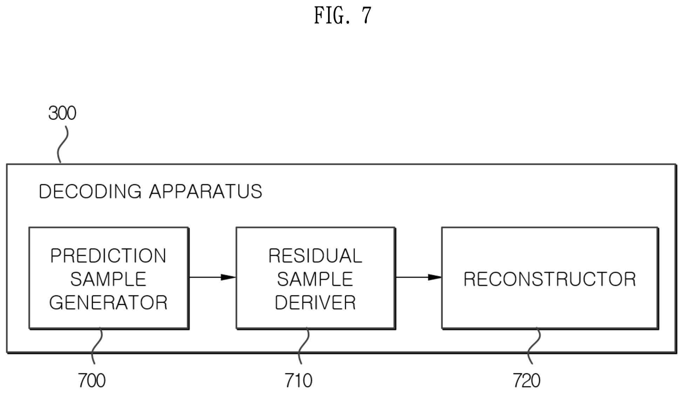

FIG. 7 illustrates a schematic configuration of a decoding apparatus (300) that performs an image decoding method according to the present disclosure.

Referring to FIG. 7, the decoding apparatus (300) may include a prediction sample generator (700), a residual sample deriver (710), and a reconstructor (720).

The prediction sample generator (700) may be configured in the inter predictor (332) in FIG. 3. The prediction sample generator (700) may generate prediction samples of a current block based on a predetermined inter prediction mode.

Specifically, when the current block is coded in the merge mode, the prediction sample generator (700) may set any one of the plurality of inter prediction modes pre-defined in the image decoding apparatus as the inter prediction mode of the current block. In this case, the plurality of inter prediction modes may include at least one of the subblock merge mode, the MMVD (merge mode with motion vector difference) mode, the regular merge mode, the CIIP (combined inter and intra prediction) mode, or the GPM mode. This is as described with reference to FIG. 4.

Alternatively, when the current block is coded in the skip mode, the prediction sample generator (700) may generate prediction samples of the current block based on any one of the aforementioned inter prediction modes. The generated prediction samples may be set as reconstruction samples. However, when the current block is coded in the skip mode, the CIIP mode may be restricted from being applied. Alternatively, similar to the aforementioned merge mode, even when the current block is coded in the skip mode, the application of the CIIP mode to the current block may be allowed. When the current block is coded in the skip mode, the GPM-INTRA-based merge mode may not be allowed.

The method for generating prediction samples according to a predetermined inter prediction mode is as described with reference to FIG. 4, and a detailed description thereof will be omitted here.

The residual sample deriver (710) may be configured in the residual processor (320) of FIG. 3. The residual sample deriver (710) may derive residual samples of the current block based on information on subblock transform. Here, the information on subblock transform may include at least one of an SBT flag (cu_sbt_flag), an SBT size flag (cu_sbt_quad_flag), an SBT direction flag (cu_sbt_horizontal_flag), or an SBT position flag (cu_sbt_pos_flag), as described with reference to FIG. 4.

In addition, as described with reference to FIG. 4, when the CIIP mode is applied to the current block, all or some of the information on subblock transform may be derived by using the characteristics of the CIIP mode. When the CIIP mode is applied to the current block, at least one of the information on the subblock transform may not be signaled and may be derived as a specific value based on at least one of a weight (or a weight index), an intra prediction mode, a range of a region to which the weight is applied, or a position of a sub-region to which the weight is applied in the CIIP mode. When the GPM mode is applied to the current block, subblock transform may be allowed for the current block, and at least one of the information on the subblock transform may not be signaled and may be derived as a specific value based on the information on the GPM for the current block.

The reconstructor (720) may be configured in the adder (340) of FIG. 3. The reconstructor (720) may reconstruct the current block based on the prediction samples and residual samples of the current block.

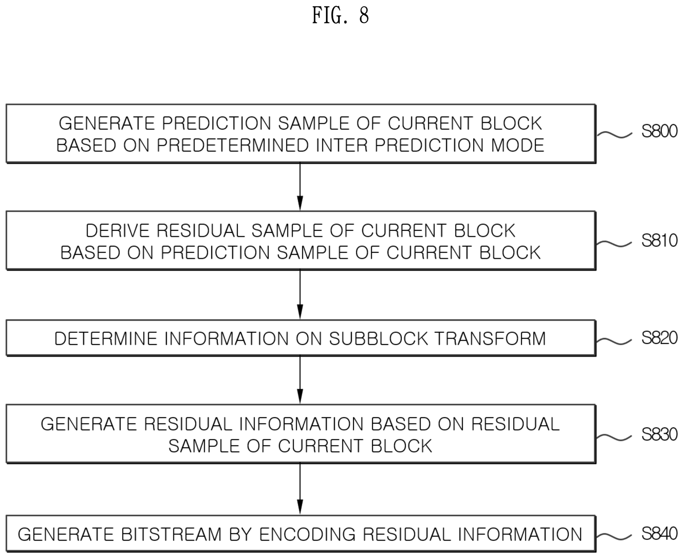

FIG. 8 illustrates an image encoding method performed in an encoding apparatus according to the present disclosure.

Referring to FIG. 8, prediction samples of a current block may be generated based on a predetermined inter prediction mode (S800).

When the current block is encoded in the merge mode, any one of a plurality of inter prediction modes pre-defined in the image encoding apparatus may be set as the inter prediction mode of the current block. In this case, the plurality of inter prediction modes may include at least one of a subblock merge mode, an MMVD mode, a regular merge mode, a CIIP mode, or a GPM mode. This is as described with reference to FIG. 4.

When the current block is encoded in the merge mode, which of the aforementioned inter prediction modes corresponds to the inter prediction mode of the current block may be sequentially checked according to the priority order between the inter prediction modes. For example, first, it may be determined whether the inter prediction mode of the current block is the subblock merge mode. When the inter prediction mode of the current block is determined to be the subblock merge mode, merge_subblock_flag may be encoded as 1, and when the inter prediction mode of the current block is not determined to be the subblock merge mode, merge_subblock_flag may be encoded as 0.

When the inter prediction mode of the current block is not determined to be the subblock merge mode, it may be determined whether the inter prediction mode of the current block is the regular merge mode. When the inter prediction mode of the current block is determined to be the regular merge mode, regular_merge_flag may be encoded as 1, and it may be additionally determined whether the inter prediction mode of the current block is the MMVD mode. When the inter prediction mode of the current block is determined to be the MMVD mode, mmvd_merge_flag may be encoded as 1. When the inter prediction mode of the current block is not determined to be the MMVD mode, mmvd_merge_flag is encoded as 0, and the inter prediction mode of the current block may be determined to be the regular merge mode.

When the inter prediction mode of the current block is not determined to be the regular merge mode, it may be determined whether the inter prediction mode of the current block is the CIIP mode. When the inter prediction mode of the current block is determined to be the CIIP mode, ciip_flag may be encoded as 1. When the inter prediction mode of the current block is not determined to be the CIIP mode, ciip_flag may be encoded as 0, and it may be additionally determined whether the inter prediction mode of the current block is the GPM-INTRA-based merge mode. When the inter prediction mode of the current block is determined to be the GPM-INTRA-based merge mode, gpm_intra_flag may be encoded as 1. When the inter prediction mode of the current block is not determined to be the GPM-INTRA-based merge mode, gpm_intra_flag may be encoded as 0, and the inter prediction mode of the current block may be determined to be the GPM-based merge mode.

When the current block is encoded in the skip mode, prediction samples of the current block may be generated based on any one of the aforementioned inter prediction modes, and the generated prediction samples may be set as reconstruction samples. However, when the current block is encoded in the skip mode, the CIIP mode may be restricted from being applied. Alternatively, similar to the aforementioned merge mode, the application of the CIIP mode to the current block may be allowed even when the current block is encoded in the skip mode. This is as described with reference to FIG. 4.

Intra prediction sample according to the CIIP mode may be derived based on any one of the pre-defined intra prediction modes. A candidate list may be constructed to derive the intra prediction mode of the current block, and at least one of the mode index (ciip_mpm_idx) or the group index (ciip_group_idx) for specifying the intra prediction mode of the current block may be encoded. This is as described with reference to FIG. 4.

When the CIIP mode is applied to the current block, a weight for a weighted sum between the inter prediction sample and the intra prediction sample of the current block may be determined. The weight may be determined based on at least one of the intra prediction mode of the current block or the position of the sub-region to which the prediction sample belongs. Alternatively, the image encoding apparatus may determine an optimal weight among pre-defined weight candidates and encode a weight index indicating the optimal weight. The method for determining the weight and the method for applying the same are as described with reference to FIG. 4.

Information on GPM according to the present disclosure may include at least one of information for a GPM-INTRA-based merge mode or information for a GPM-based merge mode. As described with reference to FIG. 4, information on GPM may include at least one of merge_gpm_partition_idx, gpm_intra_flag0, gpm_intra_mode_idx0, merge_gpm_idx0, gpm_intra_flag1, gpm_intra_mode_idx1, or merge_gpm_idx1.

It may be determined whether the first partition in the current block is predicted based on the intra mode, and gpm_intra_flag0 may be encoded based on the determination. When gpm_intra_flag0 is encoded as 1, an intra prediction mode for the first partition may be determined, and gpm_intra_mode_idx0 indicating the intra prediction mode may be encoded. On the other hand, when gpm_intra_flag0 is encoded as 0, a merge candidate for the first partition may be determined from the merge candidate list of the current block, and merge_gpm_idx0 indicating the merge candidate may be encoded.

Similarly, it may be determined whether the second partition in the current block is predicted based on the intra mode, and gpm_intra_flag1 may be encoded based on the determination. When gpm_intra_flag1 is encoded as 1, an intra prediction mode for the second partition may be determined, and gpm intra_mode_idx1 indicating the intra prediction mode may be encoded. On the other hand, when gpm_intra_flag1 is encoded as 0, a merge candidate for the second partition may be determined from the merge candidate list of the current block, and merge_gpm_idx1 indicating the merge candidate may be encoded.

The CIIP mode may be allowed when the current block is not encoded in the skip mode. Similarly, the GPM-INTRA-based merge mode may also be restricted to be allowed when the current block is not encoded in the skip mode. That is, when the current block is encoded in the skip mode, the GPM-INTRA-based merge mode may not be allowed for the current block. For this purpose, at least one of the information on the GPM described above may be adaptively signaled based on a flag (cu_skip_flag) indicating whether the current block is a block encoded in the skip mode, as described with reference to FIG. 4.

Referring to FIG. 8, residual samples of the current block may be derived based on prediction samples of the current block (S810).

Residual samples of the current block may be derived by subtracting prediction samples of the current block from original samples of the current block.

Referring to FIG. 8, information on subblock transform for encoding residual samples of the current block may be determined (S820).

Information on subblock transform according to the present disclosure may include at least one of an SBT flag (cu_sbt_flag), an SBT size flag (cu_sbt_quad_flag), an SBT direction flag (cu_sbt_horizontal_flag), or an SBT position flag (cu_sbt_pos_flag). This is as described with reference to FIG. 4.

When the CIIP mode is applied to the current block, all or some of the information on the subblock transform may be derived by using the characteristics of the CIIP mode, thereby reducing the number of bits for signaling the information on the subblock transform. This is as described with reference to Fig. 4.

When the CIIP mode is applied to CIIP current block, at least one of the information on subblock transform may not be signaled and may be derived as a specific value based on at least one of a weight (or weight index), an intra prediction mode, a range of a region to which the weight is applied, or a position of a sub-region to which the weight is applied in the CIIP mode. This is as described with reference to FIG. 4.

When the GPM mode is applied to the current block, subblock transform may be allowed for the current block. At least one of the information on the subblock transform may not be signaled and may be derived as a specific value based on the information on the GPM for the current block. This is as described with reference to Fig. 4.

Referring to FIG. 8, residual samples of a current block may be encoded to generate residual information (S830). Here, encoding of residual samples may include at least one of 1) transform of residual samples, 2) quantization of transform coefficients, or 3) determination of residual information on quantized transform coefficients.

Referring to Fig. 8, residual information of the current block may be encoded to generate a bitstream (S840). The bitstream may further include information specifying the inter prediction mode of the current block. The bitstream may further include all or some of information on subblock transform of the current block.

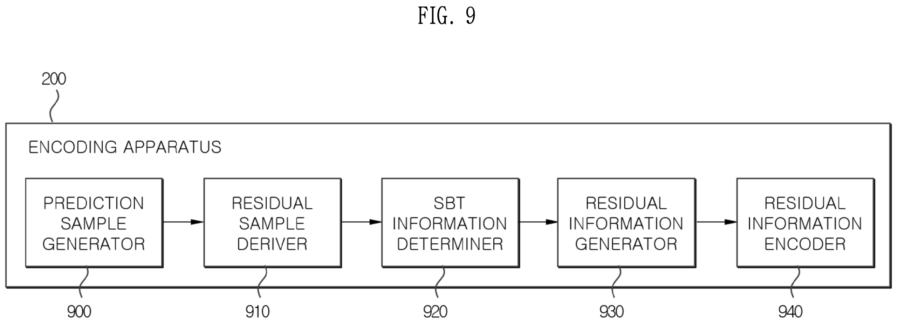

FIG. 9 illustrates a schematic configuration of an encoding apparatus (200) that performs an image encoding method according to the present disclosure.

Referring to FIG. 9, the encoding apparatus (200) may include a prediction sample generator (900), a residual sample deriver (910), an SBT information determiner (920), a residual information generator (930), and a residual information encoder (940).

The prediction sample generator (900) may be configured in the inter predictor (220) of FIG. 2. The prediction sample generator (900) may generate prediction samples of the current block based on a predetermined inter prediction mode. The method for determining/signaling the inter prediction mode of the current block and the method for generating prediction samples according to the same are as described with reference to FIG. 4 and FIG. 8.

A residual sample deriver (910), an SBT information determiner (920), and a residual information generator (930) may be configured in the residual processor (230) of FIG. 2. The residual sample deriver (910) may derive residual samples of the current block based on prediction samples of the current block. The SBT information determiner (920) may determine information on subblock transform for encoding residual samples of the current block. A method of signaling/deriving information on subblock transform has been described with reference to FIGS. 4 and 8. The residual information generator (930) may generate residual information by encoding residual samples of the current block.

The residual information encoder (940) may be configured in the entropy encoder (240) of Fig. 2. The residual information encoder (940) may encode residual information of the current block to generate a bitstream.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

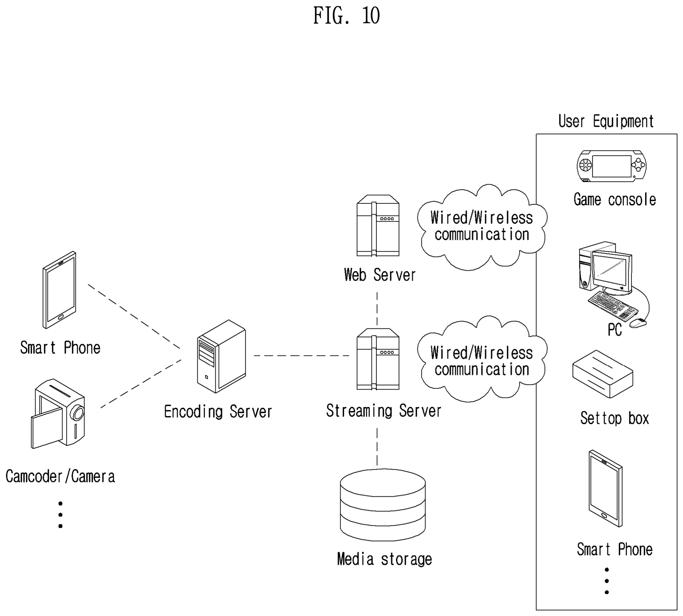

FIG. 10 shows an example of a contents streaming system to which embodiments of the present disclosure may be applied.

Referring to FIG. 10, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, comprising:

   generating prediction samples of a current block based on a predetermined inter prediction mode;
   deriving residual samples of the current block based on information on subblock transform (SBT); and
   reconstructing the current block based on the prediction samples and residual samples of the current block,
   wherein at least one of the information on the SBT is derived based on the inter prediction mode, and
   wherein the information on the SBT includes at least one of an SBT flag, an SBT size flag, an SBT direction flag, or an SBT position flag.

2. The method of claim 1, wherein when the inter CIIP mode of the current block is a CIIP mode, the SBT is allowed for the current block.

3. The method of claim 2, wherein when the inter prediction mode of the current block is the CIIP mode, at least one of the information on the SBT is not signaled and is derived based on an intra prediction mode for the CIIP mode.

4. The method of claim 3, wherein the intra prediction mode of the current block is derived as any one of one or more candidate modes belonging to a candidate list.

5. The method of claim 2, wherein when the inter prediction mode of the current block is the CIIP mode, at least one of the information on the SBT is not signaled and is derived based on a weight for the CIIP mode.

6. The method of claim 5, wherein the weight is determined based on at least one of an intra prediction mode of the current block, a position of a sub-region to which a prediction sample of the current block belongs, or a weight index.

7. The method of claim 5, wherein the CIIP mode is allowed regardless of a flag indicating whether the current block is a block coded in a skip mode.

8. The method of claim 1, wherein when the inter prediction mode of the current block is a geometric partitioning merge mode, the subblock transform is allowed for the current block.

9. The method of claim 8, wherein when the inter prediction mode of the current block is the geometric partitioning merge mode, at least one of the information on the SBT is not signaled and is derived based on at least one of an angle of a boundary line according to geometric partitioning of the current block or a distance from a center position of the current block to the boundary line.

10. An image encoding method, comprising:

    generating prediction samples of a current block based on a predetermined inter prediction mode;
    deriving residual samples of the current block based on the prediction samples of the current block;
    determining information on subblock transform (SBT) for encoding the residual samples of the current block;
    encoding the residual samples of the current block to generate residual information; and
    encoding the residual information of the current block to generate a bitstream,
    wherein at least one of the information on the SBT is derived based on the inter prediction mode, and

wherein the information on the SBT includes at least one of an SBT flag, an SBT size flag, an SBT direction flag, or an SBT position flag.

11. A computer-readable storage medium storing a bitstream generated by an image encoding method according to claim 10.

12. A method of transmitting data, comprising:

obtaining a bitstream for image information, wherein the bitstream is generated by generating prediction samples of a current block based on a predetermined inter prediction mode, deriving residual samples of the current block based on the prediction samples of the current block, determining information on subblock transform (SBT) for encoding the residual samples of the current block, encoding the residual samples of the current block to generate residual information, and encoding the residual information of the current block; and
transmitting the data including the bitstream,
wherein at least one of the information on the SBT is derived based on the inter prediction mode, and
wherein the information on the SBT includes at least one of an SBT flag, an SBT size flag, an SBT direction flag, or an SBT position flag.

FIG.1

# FIG.2

EP 4 645 852 A1

# FIG.3

FIG.4

GENERATE PREDICTION SAMPLE OF CURRENT BLOCK
BASED ON PREDETERMINED INTER PREDICTION MODE — S400

DERIVE RESIDUAL SAMPLE OF CURRENT BLOCK
BASED ON INFORMATION ON SUBBLOCK TRANSFORM — S410

RECONSTRUCT CURRENT BLOCK
BASED ON PREDICTION SAMPLE AND RESIDUAL SAMPLE — S420

FIG. 5

FIG. 6

FIG. 7

300

DECODING APPARATUS

| PREDICTION SAMPLE GENERATOR | RESIDUAL SAMPLE DERIVER | RECONSTRUCTOR |

700 710 720

FIG. 8

GENERATE PREDICTION SAMPLE OF CURRENT BLOCK
BASED ON PREDETERMINED INTER PREDICTION MODE ～ S800

DERIVE RESIDUAL SAMPLE OF CURRENT BLOCK
BASED ON PREDICTION SAMPLE OF CURRENT BLOCK ～ S810

DETERMINE INFORMATION ON SUBBLOCK TRANSFORM ～ S820

GENERATE RESIDUAL INFORMATION BASED ON RESIDUAL
SAMPLE OF CURRENT BLOCK ～ S830

GENERATE BITSTREAM BY ENCODING RESIDUAL INFORMATION ～ S840

FIG. 9

FIG. 10

## INTERNATIONAL SEARCH REPORT

| International application No. |
| --- |
| **PCT/KR2023/021961** |

| A. | CLASSIFICATION OF SUBJECT MATTER |
| --- | --- |

**H04N 19/107**(2014.01)i; **H04N 19/70**(2014.01)i; **H04N 19/157**(2014.01)i; **H04N 19/109**(2014.01)i; **H04N 19/52**(2014.01)i; **H04N 19/593**(2014.01)i; **H04N 19/176**(2014.01)i

According to International Patent Classification (IPC) or to both national classification and IPC

| B. | FIELDS SEARCHED |
| --- | --- |

Minimum documentation searched (classification system followed by classification symbols)

H04N 19/107(2014.01); H04N 19/105(2014.01); H04N 19/117(2014.01); H04N 19/119(2014.01); H04N 19/50(2014.01); H04N 19/60(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 예측(predict), 변환(transform), 서브블록(subblock), CIIP(Combined Inter-Intra Prediction), 기하학적인(geometric), 병합(merge)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2021-0057187 A (WILUS INSTITUTE OF STANDARDS AND TECHNOLOGY INC. et al.) 20 May 2021 (2021-05-20)<br>See paragraphs [0002], [0022], [0033]-[0042], [0070], [0144]-[0147], [0164]-[0165], [0266]-[0275], [0289] and [0347]; and figures 2 and 36. | 1,10-12 |
| Y | | 2-9 |
| Y | GALPIN, F. et al. Non CE4: Flexible SBT mode. JVET-P0620-v3, Joint Video Experts Team (JVET) of ITU-T SG 16 WP 3 and ISO/IEC JTC 1/SC 29/WG 11, 16th Meeting: Geneva, CH. pp. 1–2, 04 October 2019.<br>See page 1. | 2-7 |
| Y | HAN, Huang et al. CE4-related: On the SBT in CE4-1.1. JVET-P0583, Joint Video Experts Team (JVET) of ITU-T SG 16 WP 3 and ISO/IEC JTC 1/SC 29/WG 11, 16th Meeting: Geneva, CH. pp. 1-3, 30 September 2019.<br>See page 1. | 8-9 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 April 2024** | **08 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/021961** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2022-0143843 A (BEIJING BYTEDANCE NETWORK TECHNOLOGY CO., LTD. et al.) 25 October 2022 (2022-10-25)<br>See claims 1-13. | 1-12 |
| A | KR 10-2022-0165273 A (LG ELECTRONICS INC.) 14 December 2022 (2022-12-14)<br>See paragraphs [0067], [0279] and [0365]. | 1-12 |

Form PCT/ISA/210 (second sheet) (July 2022)

## INTERNATIONAL SEARCH REPORT
### Information on patent family members

International application No.

**PCT/KR2023/021961**

| Patent document cited in search report | | | Publication date (day/month/year) | Patent family member(s) | | | Publication date (day/month/year) |
|---|---|---|---|---|---|---|---|
| KR | 10-2021-0057187 | A | 20 May 2021 | CN | 112840654 | A | 25 May 2021 |
| | | | | EP | 3866468 | A1 | 18 August 2021 |
| | | | | JP | 2023-162362 | A | 08 November 2023 |
| | | | | JP | 7342118 | B2 | 11 September 2023 |
| | | | | US | 11601641 | B2 | 07 March 2023 |
| | | | | US | 2023-0113874 | A1 | 13 April 2023 |
| | | | | WO | 2020-076143 | A1 | 16 April 2020 |
| KR | 10-2022-0143843 | A | 25 October 2022 | CN | 115398913 | A | 25 November 2022 |
| | | | | EP | 4097979 | A1 | 07 December 2022 |
| | | | | JP | 2024-003022 | A | 11 January 2024 |
| | | | | JP | 7415027 | B2 | 16 January 2024 |
| | | | | US | 11889119 | B2 | 30 January 2024 |
| | | | | US | 2023-0046629 | A1 | 16 February 2023 |
| | | | | WO | 2021-170096 | A1 | 02 September 2021 |
| KR | 10-2022-0165273 | A | 14 December 2022 | US | 2023-0137884 | A1 | 04 May 2023 |
| | | | | WO | 2021-206445 | A1 | 14 October 2021 |

Form PCT/ISA/210 (patent family annex) (July 2022)